# EUROPEAN PATENT SPECIFICATION

(11) **EP 0 656 417 B1**
(45) Date of publication and mention of the grant of the patent: **09.02.2000**
(21) Application number: 93870228.9
(22) Date of filing: 29.11.1993
(51) Int. Cl.: C11D 3/34, C11D 7/34, C11D 3/39, C02F 5/08

(54) **Limescale removal compositions**
Zusammensetzungen zum Entfernen von Kesselstein
Des compositions pour enlever le tartre

(43) Date of publication of application: 07.06.1995
(60) Divisional application: 97201141.5
(73) Proprietor: THE PROCTER & GAMBLE COMPANY, Cincinnati, Ohio 45202 (US)
(72) Inventor: Bianchetti, Giulia Ottavia, I-00144 Rome (IT); Cardola, Sergio, I-00064 Roma (IT); Scialla, Stefano, I-00128 Roma (IT)
(74) Representative: Engisch, Gautier

(56) References cited:
- EP-A- 0 271 791

## Description

### Technical Field

The present invention relates to compositions for the removal of limescale. The compositions herein can be used on a variety of surfaces, ranging from bathrooms and kitchen surfaces to various appliances. The compositions herein can further be used to remove limescale from dentures.

### Background

Tap water always contains a certain amount of solubilized ions which eventually deposit as salts, on surfaces in contact with said water, as it evaporates. Such salts include calcium carbonate, commonly referred to as limescale. This phenomenon of limescale accumulation on surfaces which are often in contact with water may damage surfaces and affect the functioning of taps or appliances. Also, the accumulation of limescale in the toilet bowls is aesthetically unpleasant and favors the deposition of further soil and the growth of microorganisms. It is therefore important to control this limescale accumulation phenomenon.

A variety of compositions have been proposed for this purpose, which typically comprise various acids, such as hydrochloric acid. However, compositions of the art formulated with said acids require a significant amount of acid to ensure effective removal of limescale, and are thus potentially harmful to the user in case of contact with the skin, or accidental ingestion. It is thus an object of the present invention to provide limescale removing compositions which are particularly efficient in removing limescale, yet which have a lower reserve of acidity than the compositions of the art, thus which are less harmful.

It is also desirable to formulate compositions which comprise bleaches. Indeed, beaches possess many desirable properties, including disinfection properties. Furthermore, such compounds as monopersulfuric acid are particularly effective as disinfectants and in removing and or decolouring stains for household cleaning applications (European patent application EP-A-598694). However, beaches in general raise compatibility issues in relation with the acids used to remove limescale. In particular, persulfuric acid is not compatible with the acids used in the art to remove limescale because persulfuric acid oxidizes the limescale removing acid upon storage, resulting in a dramatic loss of available oxygen. And by the time the product reaches the consumer, most of the available oxygen is lost. Typical acids used in the art for removing limescale, namely maleic, citric, hydrochloric and sulfamic acid are all oxidized by persulfuric acid in particular. It is thus an object of the present invention to provide a limescale removing composition which can be formulated with bleaches, in particular persulfuric acid, in a stable manner.

In response to these objects, we have now found that such a limescale removing composition could be formulated which comprises, as the acid, a C₁-C₆ linear or branched alkylsulfonic acid, or mixtures thereof and an acid-stable oxidant compound being hydrogen peroxide or a salt of persulfuric acid.

EP-A- 271 791 discloses aqueous acidic cleaning compositions comprising a C₁-C₄ alkane sulfonic acid, and a second acid being sulfuric acid and/or phosphoric acid. Said compositions are suitable for the removal of soil such as carbohydrates, protein, fats and other remains in the food processing industry.

### SUMMARY OF THE INVENTION

The present invention thus encompasses a composition suitable for removing limescale, which comprises a C₁-C₆ linear or branched alkylsulfonic acid, or mixtures thereof and an acid-stable oxidant compound being hydrogen peroxide or a salt of persulfuric acid at a level of from 1% to 30% by weight of the total composition.

### Detailed description of the invention

The compositions of the present invention are aqueous liquid compositions comprising a C1-C6 linear or branched alkylsulfonic add, or mixtures thereof. Particularly preferred for its limescale removal performance is the use herein of methanesulfonic add which is commercially available for example from Aldrich, William Blythe & Co. Ltd. or Elf Atochem. The compositions herein comprise from 1% to 50% by weight of the total composition of said add or mixtures thereof, preferably from 1% to 30%, most preferably 1% to 20%. The compositions according to the present invention are less harsh than the compositions of the art in that, at parity limescale removal performance, the reserve of acidity is much less than the compositions in the art. Thus in this respect, in case of contact with the users skin or in case of ingestion, the compositions of the present invention will be less harmful.

The pH of the compositions according to the present invention may range from 0 to 4, preferably 0 to 2, and is essentially determined by the type and amount of add used.

The compositions herein also comprise an acid-stable bleach i.e., an oxidant compound. By add-stable, it is meant herein a compound which is stable in the acidic environment of the compositions herein. This criterion is to be assessed on a case by case basis, depending on the specifics of given formulations. It is essential that the bleach/oxidant chosen be stable at the pH of the formulation being considered. By stable, it is meant herein that the oxidant should preferably not undergo more than 30% loss of available oxygen in 6 months at room temperature (25 °C). A wide variety of oxidants have been described in the art which are suitable for use herein. Suitable stable oxidant compounds for use herein include hydrogen peroxide, and persulfuric acid or salts thereof because of their excellent stain removal performance and stability in acidic matrices, and mixtures thereof.

Preferred salts of persulfuric acid for use herein are monopersulfate salts, commercially available as Curox @ from Interox. The compositions herein comprise from 1% to 30% by weight of the total compositions of said add-stable bleach/oxidant compound or mixtures thereof, preferably 1% to 20%.

The compositions herein may further comprise surfactants since they are often used on items or surfaces which have soils or stains which do not comprise limescale, and which require the presence of surfactants in the compositions of the present invention, in order to be removed from said surfaces. Thus the compositions according to the present invention can comprise any surfactant, cationic, anionic, nonionic and zwitterionic, in amounts ranging up to 50% by weight of the total composition, preferably from 1% to 30%. Suitable anionic surfactants include alkyl or alkylene sulfates or sulfonates, alkyl or alkylene ether sulfates or sulfonates, linear alkyl benzene sulfonate and the like. Suitable cationic surfactants include quaternary ammonium salts. Suitable nonionic surfactants for use herein include ethoxylated carboxylic acids and fatty alcohol ethoxylates. For example, when the compositions herein are formulated so as to be used on inclined surfaces, it may be desirable to formulate them as emulsions of nonionic surfactants, such as in EP-A-598692. Indeed, appropriate selection of the nonionic surfactants allows to obtain compositions with pseudoplastic profile which leads to excellent spreading and clinging characteristics.

The present invention can further comprise a multitude of optionals such as solvents, colorants, dyes, perfumes, stabilizers and the like.

### Examples

The following compositions are made which comprise the following ingredients in the following proportions(total weight %)

### Example 1

| | |
|---|---|
| Dobanol @ 91-10 | 2.1 |
| Dobanol @ 91-2.5 | 4.9 |
| Methanesulfonic acid | 5 |
| Curox @ | 6 |
| Cyclohexane | 0.5 |
| water and minors (e.g., dye, perfume) up to 100% | |
| pH=0.5 | |

### Example 2

| | |
|---|---|
| Dobanol @ 23-2 | 6 |
| Dobanol @ 45-7 | 6 |
| Dobanol @ 91-10 | 3 |
| Methanesulfonic acid | 5 |
| Hydrogen peroxide | 9 |
| water and minors (e.g., perfume, dye) up to 100% | |
| pH=0.5 | |

### Example 3

| | |
|---|---|
| Dobanol @ 91-10 | 1.8 |
| Dobanol @ 91-2.5 | 4.2 |
| Methanesulfonic acid | 5 |
| Curox @ | 3 |
| Hydrogen peroxide | 6 |
| water and minors (e.g., perfume, dye) up to 100% | |
| pH=0.5 | |

The limescale removal efficiency of samples maybe evaluated by putting a block of 6 g of calcium carbonate in 50 mls of the sample to be evaluated for a period of 30 minutes. The block is weighed dry before and after the experiment.

In terms of reserve of acidity, we have measured that it takes 1.88g NaOH/100g product to bring composition 1 to pH4, while it takes 16.8g NaOH/100g product to bring to pH 4 a composition marketed under the trade name WC Net @. Similarly, it takes 15.5g NaOH/100g product to bring to pH 4 a composition marketed under the trade name Harpic limescale Remover @. Thus composition 1 has much less reserve of acidity and is therefore less harmful to the user.

In terms of bleach stability, the available oxygen is monitored in composition 1. The available oxygen is measured in the fresh composition, and in the same composition after one week storage at room temperature (25 °C). We have measured there was no loss of available oxygen with composition 1 whereas in the same compositions where methanesulfonic acid was replaced respectively by the same amount (weight) of sulfamic or hydrochloric acid, the loss of available oxygen in the same period ranges between 66% and 98%. Thus the compositions according to the present invention are much more stable

## Claims

1. An aqueous composition suitable for removing limescale comprising a C₁-C₆ linear or branched alkylsulfonic acid, or mixtures thereof, as the acid, and from 1% to 30% by weight of the total composition of an acid-stable oxidant compound being hydrogen peroxide or a salt of persulfuric acid.

2. A composition according to claim 1 wherein said composition comprises from 1% to 20% by weight of the total composition of said acid-stable oxidant compound or mixtures thereof.

3. A composition according to any of the preceding claims wherein said acid stable oxidant compound is a monopersulfate salt.

4. A composition according to any of the preceding claims wherein said composition comprises from 1% to 50% by weight of the total composition of said acid or mixtures thereof, preferably from 1% to 30% and more preferably from 1% to 20%.

5. A composition according to any of the preceding claims wherein said acid is methanesulfonic acid.

6. A composition according to any of the preceding claims wherein said composition further comprises up to 50% by weight of the total composition of a surfactant system.

## Patentansprüche

1. Zur Entfernung von Kalkbelag geeignete, flüssige Zusammensetzung, umfassend eine lineare oder verzweigte C₁-C₆-Alkylsulfonsäure oder Mischungen hiervon als die Säure und 1 bis 30 Gew. -% der gesamten Zusammensetzung einer säurestabilen Oxidationsmittelverbindung, bei der es sich um Wasserstoffperoxid oder ein Salz von Perschwefelsäure handelt.

2. Zusammensetzung nach Anspruch 1, wobei die Zusammensetzung 1 bis 20 Gew.-% der gesamten Zusammensetzung der säurestabilen Oxidationsmittelverbindung oder Mischungen hiervon umfaßt.

3. Zusammensetzung nach mindestens einem der vorangehenden Ansprüche, wobei die säurestabile Oxidationsmittelverbindung ein Monopersulfatsalz ist.

4. Zusammensetzung nach mindestens einem der vorangehenden Ansprüche, wobei die Zusammensetzung 1 bis 50 Gew. -% der gesamten Zusammensetzung der Säure oder Mischungen hiervon, vorzugsweise 1 bis 30% und weiter vorzugsweise 1 bis 20%, umfaßt.

5. Zusammensetzung nach mindestens einem der vorangehenden Ansprüche, wobei die Säure Methansulfonsäure ist.

6. Zusammensetzung nach mindestens einem der vorangehenden Ansprüche, wobei die Zusammensetzung weiterhin bis zu 50 Gew. -% der gesamten Zusammensetzung eines Tensidsystems umfaßt.

## Revendications

1. Composition aqueuse utilisable pour éliminer le tartre comprenant comme acide, un acide alkylsulfonique linéaire ou ramifié en C₁-C₆, ou des mélanges de tels acides, et de 1% à 30%, en poids de la composition totale, d'un composé oxydant stable aux acides qui est le peroxyde d'hydrogène ou un sel de l'acide persulfurique.

2. Composition selon la revendication 1, dans laquelle ladite composition comprend de 1 % à 20%, en poids de la composition totale, dudit composé oxydant stable aux acides ou des mélanges de tels composés.

3. Composition selon l'une quelconque des revendications précédentes, dans laquelle ledit composé oxydant stable aux acides est un sel monopersulfate.

4. composition selon l'une quelconque des revendications précédentes, dans laquelle ladite composition comprend de 1% à 50%, en poids de la composition totale, dudit acide ou de mélanges de tels acides, de préférence de 1% à 30%, et mieux encore de 1% à 20%.

5. Composition selon l'une quelconque des revendications précédentes, dans laquelle ledit acide est l'acide méthanesulfonique.

6. Composition selon l'une quelconque des revendications précédentes, dans laquelle ladite composition comprend en outre jusqu'à 50%, en poids de la composition totale, d'un système tensioactif.
